# EUROPÄISCHE PATENTSCHRIFT

(11) **EP 3 819 112 B1**
(45) Veröffentlichungstag und Bekanntmachung des Hinweises auf die Patenterteilung: **13.09.2023**
(21) Anmeldenummer: 20201517.8
(22) Anmeldetag: 13.10.2020
(51) Int. Cl.: B30B 15/30, G01B 7/06, G01F 23/263, B30B 11/08

(54) **VORRICHTUNG ZUM KAPAZITIVEN MESSEN DES PULVERFÜLLSTANDS IN EINER FÜLLEINRICHTUNG EINER RUNDLÄUFERPRESSE**
DEVICE FOR CAPACITIVELY MEASURING THE POWDER LEVEL IN A FILLING DEVICE OF A ROTARY PRESS
DISPOSITIF DE MESURE CAPACITIVE DU NIVEAU DE REMPLISSAGE DE POUDRE DANS UN DISPOSITIF DE REMPLISSAGE D'UNE PRESSE ROTATIVE

(30) Priorität: 05.11.2019 DE 102019129793
(43) Veröffentlichungstag der Anmeldung: 12.05.2021
(73) Patentinhaber: Fette Compacting GmbH, 21493 Schwarzenbek (DE)
(72) Erfinder: Evers, Alexander, 22941 Bargteheide (DE); Walter, Nicolas, 22149 Hamburg (DE); Kolbe, Sven, 21514 Büchen (DE)
(74) Vertreter: Hauck Patentanwaltspartnerschaft mbB

(56) Entgegenhaltungen:
- CN-U- 207 456 560
- DE-A1- 2 645 164
- DE-A1-102017 207 162
- JP-A- 2005 127 724
- JP-A- 2009 063 500
- US-A- 5 459 406

## Beschreibung

Die Erfindung betrifft eine Vorrichtung zum kapazitiven Messen des Pulverfüllstands in einer Fülleinrichtung zum Befüllen von Kavitäten einer Matrizenscheibe einer Rundläuferpresse mit in der Rundläuferpresse zu verpressendem Pulvermaterial, umfassend ein Füllrohr der Fülleinrichtung.

Die Erfindung betrifft außerdem eine Rundläuferpresse, umfassend einen mittels eines Drehantriebs drehbaren Rotor, wobei der Rotor eine obere Stempelführung für obere Stempel der Rundläuferpresse und eine untere Stempelführung für untere Stempel der Rundläuferpresse sowie eine zwischen den Stempelführungen angeordnete Matrizenschreibe aufweist, wobei die Stempel mit Kavitäten der Matrizenscheibe zusammenwirken, weiter umfassend eine Fülleinrichtung, durch die zu verpressendes Pulvermaterial in die Kavitäten der Matrizenscheibe gefüllt wird, wobei die Fülleinrichtung ein Füllrohr umfasst, weiter umfassend mindestens eine obere Druckeinrichtung und mindestens eine untere Druckeinrichtung, die im Betrieb mit den oberen Stempeln und mit den unteren Stempeln zum Verpressen des Pulvermaterials in den Kavitäten der Matrizenscheibe zusammenwirken, weiter umfassend eine Auswurfeinrichtung, in der in den Kavitäten erzeugte Pressling ausgeworfen werden.

In Rundläuferpressen wird in Kavitäten gefülltes Pulvermaterial mittels Ober- und Unterstempeln zu Presslingen, insbesondere Tabletten, verpresst. Das Pulvermaterial wird mittels einer Fülleinrichtung der Rundläuferpresse in die Kavitäten gefüllt. Derartige Fülleinrichtungen umfassen regelmäßig ein Füllrohr, durch das das Pulvermaterial in der Regel schwerkraftbedingt in eine Füllkammer fällt, aus der es wiederum in der Regel mittels Schwerkraft in die Kavitäten gelangt. Dabei ist es wünschenswert, den Füllstand in der Fülleinrichtung, insbesondere in dem Füllrohr zu überwachen, um jederzeit eine ausreichende Pulververfügbarkeit sicherzustellen. Es ist vorgeschlagen worden, hierzu Sensoren im Inneren des Füllrohrs anzuordnen. Die Anordnung eines Sensors im Pulvermaterialfluss führt allerdings zu Störungen des Pulverflusses, wie zum Beispiel eine Brückenbildung. Dies kann die Pulververfügbarkeit in unerwünschter Weise beeinträchtigen.

In EP 2 400 275 A1 wird eine Vorrichtung zur nicht-invasiven, berührungslosen kapazitiven Füllstandsmessung von beispielsweise Schüttgütern in einem Behälter beschrieben. Der Füllstandsensor kommt mit dem Füllmedium, dessen Füllhöhe ermittelt werden soll, nicht in Berührung. Vielmehr sind Elektroden vorgesehen, die gleichsam einem aufgeklappten Plattenkondensator angeordnet sind und zwischen denen ein hochfrequentes elektrisches Wechselfeld erzeugt wird, welches das zu messende Material zerstörungsfrei durchdringt. Die Kapazität des so gebildeten Kondensators hängt von der Permittivität des Füllmaterials ab. Dabei besitzt das zu vermessende Füllmaterial eine andere Permittivität als Luft. Auf diese Weise führt eine unterschiedlich hohe Bedeckung der Sensorfläche mit dem zu vermessenden Material zu einer unterschiedlichen Kapazität des Kondensators. Hieraus kann auf die Füllhöhe des Materials in dem Behälter geschlossen werden.

Ein Problem stellen dabei externe Störeinflüsse dar, wie zum Beispiel externe elektromagnetische Felder oder externe Objekte, wie zum Beispiel eine Hand einer Bedienperson in der Nähe der Messelektroden. Um die Störungsanfälligkeit für Einflüsse von außen zu verringern, wird in EP 2 400 275 A1 vorgeschlagen, mehrere Messelektroden in unterschiedlichen horizontalen Ebenen anzuordnen, die eine Messfläche mit vertikaler Ausdehnung definieren, und mindestens eine Referenzelektrode vorzusehen, die eine Referenzfläche mit vertikaler Ausdehnung definiert. Jede der mehreren Messelektroden bildet zusammen mit der Referenzelektrode jeweils einen Kondensator aus. Dabei werden mindestens zwei Kondensatoren gemessen und die Messwerte zueinander in Beziehung gesetzt.

Durch Plausibilitätsprüfungen sollen äußere Einflüsse als Störquellen rechnerisch eliminiert werden. Die bekannte Vorrichtung ist jedoch von erheblichem konstruktivem und auswertetechnischem Aufwand. Auch bietet die Plausibilitätsbetrachtung nicht immer ein zuverlässiges Ergebnis.

Zum Schutz vor externen Störquellen bei der kapazitiven Füllstandsmessung ist aus der Praxis weiterhin das sogenannte Active Shielding bekannt, bei dem eine als Schild dienende Elektrode bei der Messung auf das gleiche Spannungspotential angesteuert wird wie die Messelektroden. Während durch dieses Active Shielding der Einfluss externer Störquellen verringert werden kann, besteht dennoch weiterhin ein Bedürfnis nach einem verbesserten Schutz gegenüber Störungen bei der kapazitiven Füllstandsmessung.

Aus JP 2009/063500 A ist eine kapazitive Messeinrichtung gemäss dem Oberbegriff des Anspruchs 1 zum Messen des Flüssigkeitsfüllstands in einem Tank bekannt. Der Sensor weist eine auf die Außenseite eines Messrohrs aufgebrachte Anode und Kathode auf, die von einer elektrisch leitfähigen und auf Erdpotential liegenden Sensorhalterung zur Reduzierung externer Störeinflüsse abgeschirmt sind.

Aus DE 10 2017 207 162 A1 ist eine Tablettenpresse bekannt mit einem oberhalb des Rotors der Presse angeordneten Steigrohr, welches in einem Füllschuh ausläuft. Der Füllschuh dient der Zuführung eines zu komprimierenden Produkts. Auf der im Füllschuh anvisierten Füllhöhe des Produkts ist ein Sensor zur Detektion der Füllstandshöhe angeordnet. Als Sensor kann beispielsweise ein kapazitiver Füllstandssensor vorgesehen sein.

Aus DE 26 45 164 A1 ist eine Füllstandsanzeigevorrichtung zur Bestimmung der Höhe einer sich in einem Schacht nach unten erstreckenden Säule aus Tabak bekannt. Die Vorrichtung weist eine Elektrode zur kapazitiven Füllstandsmessung auf, die von einer Schirmelektrode gegen äußere elektrische Streufelder und Störfelder abgeschirmt wird. Dabei wird die Schirmelektrode von einem Spannungsnachführverstärker, dessen Eingang mit der Elektrode verbunden ist, mit einer Spannung beaufschlagt.

Ausgehend von dem erläuterten Stand der Technik liegt der Erfindung die Aufgabe zugrunde, eine Vorrichtung und eine Rundläuferpresse der eingangs genannten Art bereitzustellen, mit denen eine Füllstandsmessung in der Fülleinrichtung einer Rundläuferpresse ohne Störung des Pulverflusses und unter Minimierung externer Störeinflüsse möglich ist.

Die Erfindung löst die Aufgabe durch die Gegenstände der Ansprüche 1 und 14. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass an dem Füllrohr eine erste Messelektrode angeordnet ist, die mit einer Referenzelektrode einen ersten elektrischen Kondensator ausbildet, so dass zwischen der ersten Messelektrode und der Referenzelektrode ein elektrisches Feld ausbildbar ist, und dass die erste Messelektrode auf ihrer dem Füllrohr abgewandten Seite durch eine elektrisch leitfähige Schutzabschirmung abgedeckt ist, wobei die Schutzabschirmung auf Erdpotential liegt.

Für eine Rundläuferpresse der eingangs genannten Art löst die Erfindung die Aufgabe dadurch, dass sie eine erfindungsgemäße Vorrichtung zum kapazitiven Messen des Pulverfüllstands in der Fülleinrichtung umfasst.

Bei der Rundläuferpresse kann es sich insbesondere um eine Rundläufertablettenpresse handeln. In der Rundläuferpresse zu verarbeitendes Pulvermaterial wird durch das Füllrohr der Matrizenscheibe zugeführt. Das Pulvermaterial kann schwerkraftbedingt durch die Fülleinrichtung und das Füllrohr gefördert werden. Das Füllrohr kann also ein Fallrohr bilden. Das Füllrohr kann dazu geeignet angeordnet sein. Zum Beispiel kann die Längsachse des Füllrohrs gegenüber der Horizontalen ausreichend geneigt sein, insbesondere zum Beispiel vertikal verlaufen. Die Fülleinrichtung kann weiterhin mindestens eine Füllkammer aufweisen, in die das Pulvermaterial aus dem Füllrohr gelangt. Aus der Füllkammer wird das Pulvermaterial den Kavitäten der Matrizenscheibe zugeführt, insbesondere wiederum schwerkraftbedingt, wo das Pulvermaterial in an sich bekannter Weise durch die Ober- und Unterstempel zu Presslingen, insbesondere Tabletten, verpresst wird. Die Kavitäten können unmittelbar durch Bohrungen der Matrizenscheibe gebildet sein. Es können in der Matrizenscheibe aber auch lösbar befestigte Matrizenhülsen angeordnet sein, in denen die Kavitäten ausgebildet sind.

Zum kapazitiven Messen des Pulverfüllstands in dem Füllrohr ist an dem Füllrohr eine erste Messelektrode angeordnet. Sie wirkt mit einer Referenzelektrode der Vorrichtung zusammen. Zusammen bilden die Elektroden einen elektrischen Kondensator, ähnlich einem Plattenkondensator. Die erste Messelektrode erstreckt sich über einen gewissen Messbereich in Axialrichtung des Füllrohrs. Auch die Referenzelektrode kann sich über diesen Bereich erstrecken. Zwischen der ersten Messelektrode und der Referenzelektrode wird im Betrieb ein elektrisches Feld ausgebildet, dass das Innere des Füllrohrs und damit das zu messende Pulvermaterial zerstörungsfrei durchdringt. Die Kapazität des Kondensators hängt wie erläutert von der Permittivität des vom elektrischen Feld durchdrungenen Mediums ab. So weist Luft eine andere Permittivität auf als das in der Rundläuferpresse zu verarbeitende Pulvermaterial. Dadurch kann anhand einer Kapazitätsmessung des Kondensators auf den Grad der Überdeckung der Elektroden durch Pulvermaterial geschlossen werden. Daraus wiederum kann auf den Füllstand des Pulvermaterials in dem Füllrohr geschlossen werden. Natürlich können auch mehrere erste Messelektroden vorgesehen sein. Die Referenzelektrode kann ebenfalls mehrere (Unter-)Referenzelektroden umfassen bzw. durch mehrere (Unter-)Referenzelektroden gebildet sein.

Erfindungsgemäß ist die erste Messelektrode auf ihrer dem Füllrohr abgewandten Seite durch eine elektrisch leitfähige und geerdete Schutzabschirmung abgedeckt, insbesondere vollständig abgedeckt. Das Füllrohr kann zum Beispiel aus einem Metall, wie Edelstahl bestehen. Die Schutzabschirmung kann ebenfalls aus Metall, zum Beispiel Aluminium oder ebenfalls aus Edelstahl bestehen. Erfindungsgemäß ist erkannt worden, dass die im Stand der Technik vorgeschlagene Methode des Active Shielding für die Füllstandsmessung von Pulvermaterial in einer Fülleinrichtung einer Rundläuferpresse nicht ausreichend ist um auch bei der erfindungsgemäßen Anwendung trotz etwaiger externer Störquellen zuverlässige Messergebnisse zu erhalten. Im Stand der Technik wird das Active Shielding für einen geschlossenen Tank vorgeschlagen und zum Messen einer Flüssigkeit. Die vorliegenden Erfinder haben allerdings erkannt, dass gerade die Förderung eines Pulvermaterials durch eine Fülleinrichtung, insbesondere ein Füllrohr, im Vergleich zur Füllstandsmessung einer Flüssigkeit in einem geschlossenen Tank zu anderen Problemstellungen führt. So führt einerseits das Fördern des Pulvermaterials durch die Fülleinrichtung nach Erkenntnissen der Erfinder zu einer statischen Aufladung des Pulvermaterials, die die Messergebnisse beeinflussen kann. Außerdem besitzt das in einer Rundläuferpresse zu verarbeitende Pulvermaterial eine geringere Permittivität als die im Stand der Technik in einem Tank zu messende Flüssigkeit. Diese Unterschiede bei der Anwendung machen bei der erfindungsgemäßen Anwendung eine höhere Messgenauigkeit erforderlich. Dies wiederum führt dazu, dass das Ausschließen externer Störungen, zum Beispiel durch externe elektromagnetische Felder oder in der Nähe der Messvorrichtung befindliche Personen, noch zuverlässiger erfolgen muss.

Dies wird durch die erfindungsgemäße elektrisch leitfähige und auf Erdpotential liegende Schutzabschirmung erreicht. Sie schirmt die erste Messelektrode sicher gegen externe elektromagnetische Störquellen ab. Damit kann erfindungsgemäß der Füllstand des in einer Rundläuferpresse zu verarbeitenden Pulvermaterials in dem Füllrohr zuverlässig ermittelt werden. Gleichzeitig werden aufwendige Anordnungen mit einer Vielzahl von Messelektroden und komplizierte und unzuverlässige Plausibilitätsbetrachtungen vermieden. Die Innengeometrie des Füllrohrs bleibt störungsfrei erhalten und der Pulverfluss wird nicht von der Messsensorik gestört oder beeinflusst. Externe Störungen beispielsweise von elektrischen Anlagen in der Rundläuferpresse oder durch Berührungen durch einen Bediener werden anders als im Stand der Technik nicht rechnerisch aus dem Messergebnis eliminiert, sondern von vornherein wirksam unterdrückt.

Die erste Messelektrode ist in einem elektrisch nicht leitfähigen Halteabschnitt angeordnet, wobei der Halteabschnitt an dem Füllrohr angeordnet ist. Auf diese Weise wird eine weiter verbesserte Abschirmung erreicht. Zum Einsatz kommen kann zum Beispiel ein nicht leitfähiger Kunststoff, wie POM. Der Halteabschnitt kann als Ganzes durch die erfindungsgemäße Schutzabschirmung nach außen abgedeckt sein. In dem Halteabschnitt kann eine Manteltasche für die erste Messelektrode und gegebenenfalls weitere Messelektroden angeordnet sein.

Weiterhin ist der Halteabschnitt in einer Aussparung des Füllrohrs angeordnet. Das Füllrohr weist dann einen Ausschnitt auf, in dem der Halteabschnitt mit der ersten Messelektrode angeordnet ist. Auf diese Weise wird ein besonders guter Messzugang zu den Pulvermaterial in dem Füllrohr und damit eine besonders genaue Messung erreicht ohne das Risiko einer Störung des Pulverflusses.

Nach einer weiteren Ausgestaltung kann ein vor dem und/oder nach dem mit der ersten Messelektrode versehenen Füllrohr befindlicher elektrisch leitfähiger Füllrohrabschnitt der Fülleinrichtung ebenfalls auf Erdpotential liegen. Wie erläutert, haben die Erfinder erkannt, dass es im Zuge der Förderung durch die Fülleinrichtung, insbesondere das Füllrohr, zu einer statischen Aufladung des Pulvermaterials kommt. Verursacht wird diese nach Erkenntnissen der Erfinder durch die Reibung zwischen dem Pulvermaterial und den das Pulvermaterial führenden Komponenten der Fülleinrichtung, insbesondere das Füllrohr. Durch eine Erdung eines stromauf des mit der ersten Messelektrode versehenen Füllrohrs befindlichen elektrisch leitfähigen Füllrohrabschnitts wird diese statische Aufladung vor der kapazitiven Füllstandsmessung eliminiert, sodass sie die anschließende Messung nicht verfälschen kann. Auch im Zuge der weiteren Pulvermaterialförderung nach der Füllstandsmessung kann es zu einer weiteren/erneuten unerwünschten statischen Aufladung des Pulvermaterials kommen. Diese kann sich negativ auf das Verarbeitungsergebnis in der Rundläuferpresse auswirken. Um dies zu verhindern, kann auch eine Erdung eines sich stromab des mit der ersten Messelektrode versehenen Füllrohrs befindlichen elektrisch leitfähigen Füllrohrabschnitts sinnvoll sein. Auch diese Füllrohrabschnitte können beispielsweise aus einem Metall, wie einem Edelstahl bestehen.

Auch die Referenzelektrode und/oder das mit der ersten Messelektrode versehene Füllrohr können auf Erdpotential liegen. Auf diese Weise kann neben einer besonders zuverlässigen Messung und einer zusätzlichen elektromagnetischen Abschirmung auch eine statische Aufladung des Pulvermaterials in dem mit der ersten Messelektrode versehenen Füllrohr verhindert bzw. eliminiert werden.

Nach einer weiteren Ausgestaltung kann die Referenzelektrode ebenfalls an dem mit der ersten Messelektrode versehenen Füllrohr angeordnet sein. Auch die Referenzelektrode kann dann auf ihrer dem Füllrohr abgewandten Seite durch die elektrisch leitfähige Schutzabschirmung abgedeckt sein, insbesondere vollständig. Auch die Referenzelektrode kann in dem elektrisch nicht leitfähigen Halteabschnitt angeordnet sein.

Nach einer weiteren Ausgestaltung kann die Referenzelektrode durch das mit der ersten Messelektrode versehene Füllrohr gebildet sein. Auf diese Weise bildet die erste Messelektrode den elektrischen Kondensator direkt mit dem Füllrohr als Referenzelektrode aus. Es kann somit im Vergleich zu der Anordnung der Referenzelektrode an dem Füllrohr eine vergrößerte Referenzelektrode als Basis für die Kapazitätsmessung zum Einsatz kommen. Insbesondere wenn das Füllrohr und gegebenenfalls auch die Schutzabschirmung ebenfalls auf Erdpotential liegen, kann so eine besonders genaue und zuverlässige Kapazitätsmessung erfolgen.

Gemäß einer weiteren Ausgestaltung kann vorgesehen sein, dass an dem Füllrohr weiterhin eine zweite Messelektrode angeordnet ist, wobei die zweite Messelektrode und die Referenzelektrode einen zweiten elektrischen Kondensator ausbilden, so dass zwischen der zweiten Messelektrode und der Referenzelektrode ein elektrisches Feld ausbildbar ist, und wobei der Messbereich der zweiten Messelektrode so gewählt ist, dass er im Betrieb der Rundläuferpresse jederzeit vollständig durch in dem Füllrohr befindliches Pulvermaterial überdeckt ist. Die Ausdehnung in Längsrichtung des Füllrohrs und damit der Messbereich der zweiten Messelektrode ist dabei kleiner als die Ausdehnung der ersten Messelektrode in Längsrichtung des Füllrohrs und damit ihr Messbereich. Beispielsweise kann die Ausdehnung der zweiten Messelektrode nicht mehr als 15 %, vorzugsweise nicht mehr als 10 % der ersten Messelektrode betragen. Die zweite Messelektrode kann sich insbesondere parallel zur ersten Messelektrode befinden und im Wesentlichen bündig mit deren unteren Ende abschließen oder über das untere Ende der ersten Messelektrode hinausragen. Das Vorsehen einer solchen zweiten Messelektrode die im Betrieb der Rundläuferpresse vollständig durch das in dem Füllrohr befindliche Pulvermaterial überdeckt ist, erlaubt eine Füllstandsmessung auch bei unterschiedlichen Pulvermaterialien oder Veränderungen in der Zusammensetzung des Pulvermaterials. So kann bei einer vollständigen Überdeckung der zweiten Messelektrode mit Pulvermaterial davon ausgegangen werden, dass das zwischen dieser und der Referenzelektrode ausgebildete elektrische Feld vollständig innerhalb des Pulvermaterials ausgebildet ist. Bei bekannter Ausdehnung der zweiten Messelektrode in Axialrichtung des Füllrohrs kann rechnerisch aus der für die erste Messelektrode gemessenen Kapazität auch bei unterschiedlichen Pulvermaterialien und ohne aufwendige zusätzliche Kalibriermaßnahmen auf den Füllstand des Pulvermaterials geschlossen werden. Es ist somit eine Messung unabhängig von dem Pulvermaterial bzw. etwaiger Veränderungen der Zusammensetzung des Pulvermaterials möglich. Es hat sich gezeigt, dass auf diese Weise die Genauigkeit der Messung weiter verbessert werden kann.

Nach einer weiteren Ausgestaltung kann vorgesehen sein, dass an dem Füllrohr weiterhin eine dritte Messelektrode angeordnet ist, wobei die dritte Messelektrode und die Referenzelektrode einen dritten elektrischen Kondensator ausbilden, so dass zwischen der dritten Messelektrode und der Referenzelektrode ein elektrisches Feld ausbildbar ist, und wobei der Messbereich der dritten Messelektrode so gewählt ist, dass er sich im Betrieb der Rundläuferpresse jederzeit oberhalb des Füllstands des Pulvermaterials in dem Füllrohr befindet. Die Ausdehnung in Längsrichtung des Füllrohrs und damit der Messbereich der dritten Messelektrode ist dabei wiederum kleiner als die Ausdehnung der ersten Messelektrode in Längsrichtung des Füllrohrs und damit ihr Messbereich. Beispielsweise kann die Ausdehnung der dritten Messelektrode wiederum nicht mehr als 15 %, vorzugsweise nicht mehr als 10 % der ersten Messelektrode betragen. Die dritte Messelektrode kann sich insbesondere parallel zur ersten Messelektrode befinden und im Wesentlichen bündig mit deren oberen Ende abschließen oder über das obere Ende der ersten Messelektrode hinausragen. Durch eine solche dritte Messelektrode, die im Betrieb der Rundläuferpresse nicht, auch nicht teilweise durch in dem Füllrohr stehendes Pulvermaterial überdeckt ist, kann bei bekannter Ausdehnung der dritten Messelektrode in Axialrichtung des Füllrohrs eine Messung unter Berücksichtigung etwaiger Eigenschaften der Fülleinrichtung, insbesondere des Füllrohrs, erfolgen. Insbesondere können im Betrieb auftretende Veränderungen der Messumgebung ohne Einfluss des Pulvermaterials erkannt und bei der Füllstandsmessung mittels der ersten Messelektrode berücksichtigt werden.

Wie bereits erläutert, kann die Referenzelektrode mehrere (Unter-)Referenzelektroden umfassen. Sie kann allerdings auch nur eine Referenzelektrode umfassen. Einige oder sämtliche der Messelektroden können mit einer Referenzelektrode in der erläuterten Weise einen elektrischen Kondensator bilden. Insbesondere wenn die Referenzelektrode mehrere (Unter-)Referenzelektroden umfasst, können einige oder sämtliche der Messelektroden jedoch auch einen elektrischen Kondensator in der erläuterten Weise mit unterschiedlichen der (Unter-)Referenzelektroden bilden.

Nach einer weiteren Ausgestaltung kann auch die zweite und/oder die dritte Messelektrode auf ihrer dem Füllrohr abgewandten Seite durch die elektrisch leitfähige Schutzabschirmung abgedeckt sein, insbesondere vollständig abgedeckt sein. Weiterhin kann auch die zweite und/oder die dritte Messelektrode in dem elektrisch nicht leitfähigen Halteabschnitt angeordnet sein. Wie bereits erläutert, kann auf diese Weise eine weitere Verbesserung des Messergebnisses erreicht werden.

Nach einer weiteren Ausgestaltung kann die Schutzabschirmung eine aktive Schutzabschirmung bilden, die bei einer Füllstandsmessung auf das gleiche elektrische Potential angesteuert wird wie die erste Messelektrode und/oder die zweite Messelektrode und/oder die dritte Messelektrode. Es kann also ein sogenanntes Active Shielding erfolgen, um die Abschirmung gegenüber externen Störquellen und damit das Messergebnis weiter zu verbessern.

Nach einer weiteren Ausgestaltung kann eine Steuer- und Auswerteeinrichtung vorgesehen sein, die die Mess- und Referenzelektroden im Betrieb der Rundläuferpresse ansteuert und anhand der Messdaten der Mess- und Referenzelektroden den Füllstand des Pulvermaterials in dem Füllrohr bestimmt. Die Steuer- und Auswerteeinrichtung kann Teil einer Steuer- und Auswerteeinrichtung der Rundläuferpresse oder getrennt hiervon ausgebildet sein.

Die Mess- und/oder Referenzelektroden können nach einer weiteren Ausgestaltung auf im Wesentlichen nicht flexiblen PCB-Leiterplatten angeordnet sein. Solche klassischen PCB-Leiterplatten weisen eine Dicke von regelmäßig mehr als 1 mm auf. Dies führt zu einer zusätzlichen Isolierung, durch die externe Störeinflüsse weiter minimiert werden können.

Ein Ausführungsbeispiel der Erfindung wird nachfolgend anhand von Figuren näher erläutert. Es zeigen schematisch:
- Fig. 1: eine erfindungsgemäße Rundläuferpresse in einer abgewickelten Darstellung des Rotors,
- Fig. 2: eine erfindungsgemäße Vorrichtung zum kapazitiven Messen des Pulverfüllstands in der Fülleinrichtung einer Rundläuferpresse in einer Seitenansicht,
- Fig. 3: eine Schnittansicht entlang der Linie A-A in Figur 2,
- Fig. 4: eine Schnittansicht entlang der Linie B-B in Figur 3, und
- Fig. 5: die Ansicht aus Figur 2 mit entfernter Schutzabschirmung.

Soweit nichts anderes angegeben ist, bezeichnen in den Figuren gleiche Bezugszeichen gleiche Gegenstände.

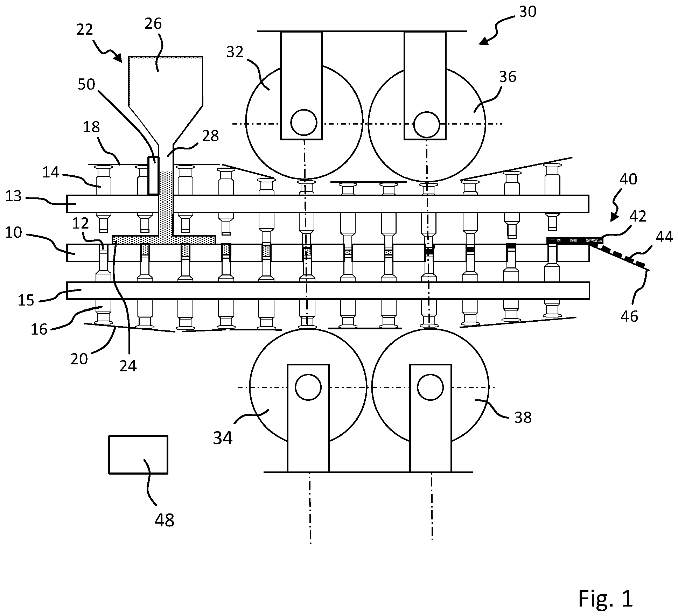

Die in Figur 1 gezeigte Rundläufertablettenpresse umfasst einen durch einen nicht näher dargestellten Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von oberen in einer oberen Stempelführung 13 geführten Stempeln 14 und eine Mehrzahl von in einer unteren Stempelführung 15 geführten unteren Stempeln 16, die mit der Matrizenscheibe 10 synchron umlaufen. Jeweils ein Paar aus oberem Stempel 14 und unterem Stempel 16 ist dabei einer Kavität 12 zugeordnet. Die axiale Bewegung der oberen Stempel 14 und unteren Stempel 16 im Zuge der Drehung des Rotors wird durch obere Steuerkurvenelemente 18 und untere Steuerkurvenelemente 20 gesteuert. Die Rundläufertablettenpresse umfasst weiterhin eine Fülleinrichtung 22, die eine Füllkammer 24 aufweist. Die Fülleinrichtung 22 umfasst darüber hinaus ein trichterförmiges Füllmaterialreservoir 26, das über ein Füllrohr 28 mit der Füllkammer 24 in Verbindung steht. Auf diese Weise gelangt in dem vorliegenden Beispiel pulverförmiges Füllmaterial über das Füllrohr 28 schwerkraftbedingt in die Füllkammer 24 und aus dieser über eine an der Unterseite der Füllkammer 24 vorgesehene Befüllöffnung wiederum schwerkraftbedingt in die Kavitäten 12 der Matrizenscheibe 10.

Außerdem umfasst die Rundläufertablettenpresse eine Druckeinrichtung 30. Die Druckeinrichtung 30 besitzt eine Vordruckeinrichtung mit einer oberen Vordruckrolle 32 und einer unteren Vordruckrolle 34 sowie eine Hauptdruckeinrichtung mit einer oberen Hauptdruckrolle 36 und einer unteren Hauptdruckrolle 38. Darüber hinaus umfasst die Rundläufertablettenpresse eine Auswurfeinrichtung 40, vorliegend mit einem Abstreifer 42, der die in der Rundläuferpresse hergestellten Tabletten 44 einem Tablettenablauf 46 zuführt.

Eine Auswerte- und Steuereinrichtung 48 steuert den Betrieb der Rundläuferpresse und ist über nicht näher dargestellte Leitungen unter anderem mit dem Drehantrieb des Rotors verbunden.

An dem Füllrohr 28 ist außerdem eine Vorrichtung 50 zum kapazitiven Messen des Pulverfüllstands in dem Füllrohr 28 angeordnet. Die Vorrichtung 50 ist ebenfalls mit der Auswerte- und Steuereinrichtung 48 verbunden.

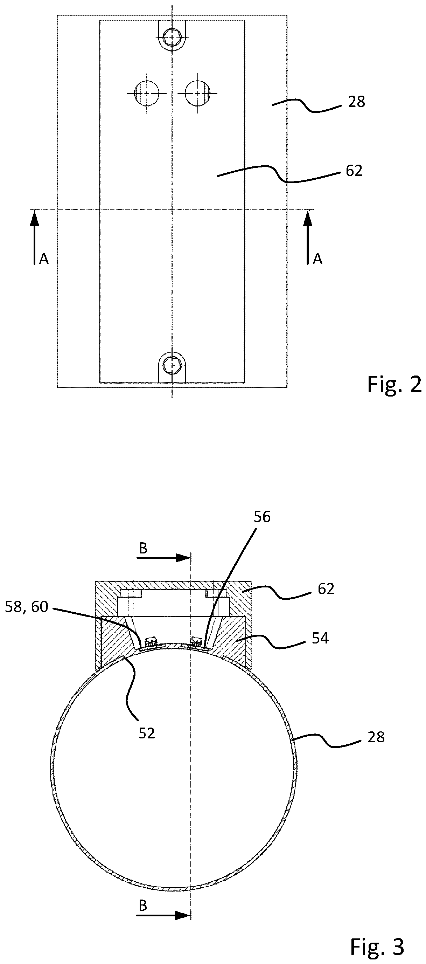

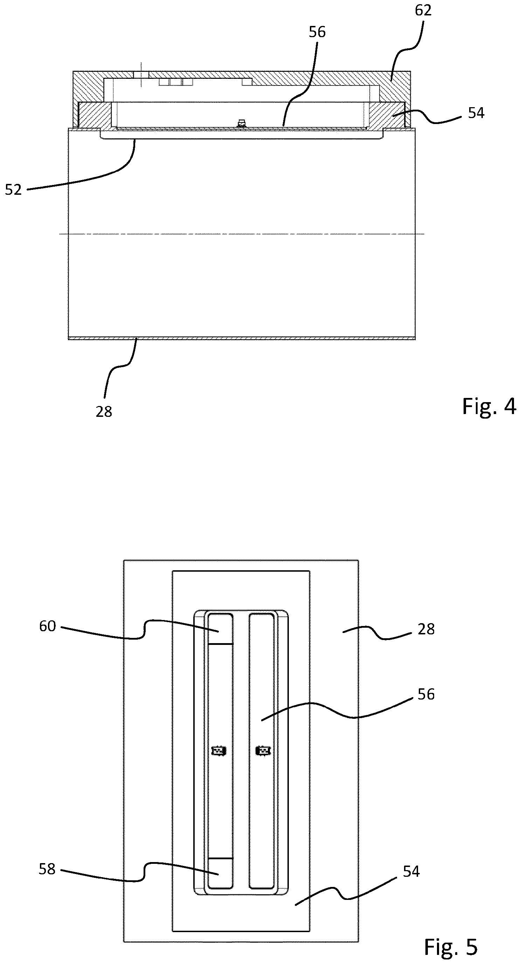

In den Figuren 2 bis 5 ist die Vorrichtung 50 zum kapazitiven Messen des Pulverfüllstands in verschiedenen Ansichten dargestellt. Wie insbesondere in den Figuren 3 und 4 zu erkennen, weist das Füllrohr 28 eine Aussparung 52 auf, in der ein Halteabschnitt 54 aus einem elektrisch nicht leitfähigen Material, beispielsweise einem Kunststoff, wie POM, angeordnet ist. Der Halteabschnitt 54 trägt eine sich in Axialrichtung des Füllrohrs 28 erstreckende erste Messelektrode 56 sowie parallel zu der ersten Messelektrode 56 angeordnete zweite und dritte Messelektroden 58, 60, die sich jeweils parallel zur und über etwa 10 % der Länge der ersten Messelektrode 56 erstrecken. Die zweite Messelektrode 58 ist im Bereich des unteren Endes der ersten Messelektrode 56 angeordnet und die dritte Messelektrode 60 im Bereich des oberen Endes der ersten Messelektrode 56, wie insbesondere in Figur 5 zu erkennen. Der Halteabschnitt 54 und mit ihm die Messelektroden 56, 58 und 60 sind darüber hinaus auf ihrer dem Füllrohr 28 abgewandten Seite durch eine elektrisch nicht leitfähige Schutzabschirmung 62 abgedeckt, die auf Erdpotential liegt. In Figur 5 ist die Schutzabschirmung 62 aus Veranschaulichungsgründen nicht gezeigt. Das Füllrohr 28 liegt in dem dargestellten Beispiel ebenfalls auf Erdpotential. Das Füllrohr 28 und die Schutzabschirmung 62 können zum Beispiel aus einem Metall bestehen. Beispielsweise kann das Füllrohr 28 aus einem Edelstahl bestehen und die Schutzabschirmung 62 aus Aluminium.

Das Füllrohr 28 bildet in dem in den Figuren dargestellten Ausführungsbeispiel eine Referenzelektrode für die Messelektroden 56, 58 und 60. Die Messelektroden 56, 58 und 60 bilden somit drei elektrische Kondensatoren mit dem Füllrohr 28 als Referenzelektrode aus, sodass zwischen den Messelektroden 56, 58 und 60 und der Referenzelektrode 28 jeweils ein elektrisches Feld ausbildbar ist. Im Betrieb der Rundläuferpresse kann die zweite Messelektrode 58 jederzeit vollständig mit in dem Füllrohr 28 befindlichem Pulvermaterial überdeckt sein, während die dritte Messelektrode 60 sich oberhalb des Füllstands des Pulvermaterials in dem Füllrohr 28 befinden kann. Die erste Messelektrode 56 bildet mit ihrer Längsausdehnung einen Messbereich zum Messen des Pulverfüllstands in dem Füllrohr 28 aus. Im Betrieb wird, angesteuert durch die Auswerte- und Steuereinrichtung 48, jeweils ein elektrisches Feld zwischen den Messelektroden 56, 58 und 60 und dem als Referenzelektrode dienenden Füllrohr 28 ausgebildet und es wird die Kapazität der jeweils gebildeten Kondensatoren gemessen, wiederum durch die Auswerte- und Steuereinrichtung 48. Aus der Kapazitätsmessung schließt die Auswerte- und Steuereinrichtung 48 auf den Pulverfüllstand in dem Füllrohr 28. Externe Störeinflüsse können durch die Schutzabschirmung 62 auf Erdpotential weitestgehend minimiert werden. Durch Verwendung des ebenfalls auf Erdpotential liegenden Füllrohrs 28 als Referenzelektrode ist eine besonders genaue und zuverlässige Kapazitätsmessung möglich. Durch die zweite und dritte Messelektrode 58, 60 können durch Veränderungen des Pulvermaterials oder Eigenschaften des Füllrohrs 28 resultierende Einflüsse auf das Messergebnis eliminiert werden.

### Bezugszeichenliste

- 10: Matrizenscheibe
- 12: Kavitäten
- 13: obere Stempelführung
- 14: obere Stempel
- 15: untere Stempelführung
- 16: untere Stempel
- 18: obere Steuerkurvenelemente
- 20: untere Steuerkurvenelemente
- 22: Fülleinrichtung
- 24: Füllkammer
- 26: Füllmaterialreservoir
- 28: Füllrohr
- 30: Druckeinrichtung
- 32: obere Vordruckrolle
- 34: untere Vordruckrolle
- 36: obere Hauptdruckrolle
- 38: untere Hauptdruckrolle
- 40: Auswurfeinrichtung
- 42: Abstreifer
- 44: Tabletten
- 46: Tablettenablauf
- 48: Auswerte- und Steuereinrichtung
- 50: Vorrichtung
- 52: Aussparung
- 54: Halteabschnitt
- 56: erste Messelektrode
- 58: zweite Messelektrode
- 60: dritte Messelektrode
- 62: Schutzabschirmung

## Patentansprüche

1. Vorrichtung zum kapazitiven Messen des Pulverfüllstands in einer Fülleinrichtung (22) zum Befüllen von Kavitäten (12) einer Matrizenscheibe (10) einer Rundläuferpresse mit in der Rundläuferpresse zu verpressendem Pulvermaterial, umfassend ein Füllrohr (28) der Fülleinrichtung (22), wobei an dem Füllrohr (28) eine erste Messelektrode (56) angeordnet ist, die mit einer Referenzelektrode (28) einen ersten elektrischen Kondensator ausbildet, so dass zwischen der ersten Messelektrode (56) und der Referenzelektrode (28) ein elektrisches Feld ausbildbar ist, und wobei die erste Messelektrode (56) auf ihrer dem Füllrohr (28) abgewandten Seite durch eine elektrisch leitfähige Schutzabschirmung (62) abgedeckt ist, wobei die Schutzabschirmung (62) auf Erdpotential liegt, **dadurch gekennzeichnet, dass** die erste Messelektrode (56) in einem elektrisch nicht leitfähigen Halteabschnitt (54) angeordnet ist, und dass der Halteabschnitt (54) an dem Füllrohr (28) in einer Aussparung (52) des Füllrohrs (28) angeordnet ist.

2. Vorrichtung nach Anspruch 1, **dadurch gekennzeichnet, dass** ein vor dem und/oder nach dem mit der ersten Messelektrode (56) versehenen Füllrohr (28) befindlicher elektrisch leitfähiger Füllrohrabschnitt der Fülleinrichtung (22) ebenfalls auf Erdpotential liegt.

3. Vorrichtung nach einem der vorhergehenden Ansprüche, **dadurch gekennzeichnet, dass** auch die Referenzelektrode (28) auf Erdpotential liegt.

4. Vorrichtung nach einem der vorhergehenden Ansprüche, **dadurch gekennzeichnet, dass** das mit der ersten Messelektrode (56) versehene Füllrohr (28) ebenfalls auf Erdpotential liegt.

5. Vorrichtung nach einem der Ansprüche 1 bis 4, **dadurch gekennzeichnet, dass** die Referenzelektrode ebenfalls an dem mit der ersten Messelektrode (56) versehenen Füllrohr (28) angeordnet ist.

6. Vorrichtung nach einem der Ansprüche 1 bis 4, **dadurch gekennzeichnet, dass** die Referenzelektrode (28) durch das mit der ersten Messelektrode (56) versehene Füllrohr (28) gebildet ist.

7. Vorrichtung nach einem der vorhergehenden Ansprüche, **dadurch gekennzeichnet, dass** an dem Füllrohr (28) weiterhin eine zweite Messelektrode (58) angeordnet ist, wobei die zweite Messelektrode (58) und die Referenzelektrode (28) einen zweiten elektrischen Kondensator ausbilden, so dass zwischen der zweiten Messelektrode (58) und der Referenzelektrode (28) ein elektrisches Feld ausbildbar ist, und wobei der Messbereich der zweiten Messelektrode (58) so gewählt ist, dass er im Betrieb der Rundläuferpresse vollständig durch in dem Füllrohr (28) befindliches Pulvermaterial überdeckt ist.

8. Vorrichtung nach einem der vorhergehenden Ansprüche, **dadurch gekennzeichnet, dass** an dem Füllrohr (28) weiterhin eine dritte Messelektrode (60) angeordnet ist, wobei die dritte Messelektrode (60) und die Referenzelektrode (28) einen dritten elektrischen Kondensator ausbilden, so dass zwischen der dritten Messelektrode (60) und der Referenzelektrode (28) ein elektrisches Feld ausbildbar ist, und wobei der Messbereich der dritten Messelektrode (60) so gewählt ist, dass er sich im Betrieb der Rundläuferpresse oberhalb des Füllstands des Pulvermaterials in dem Füllrohr (28) befindet.

9. Vorrichtung nach einem der Ansprüche 7 oder 8, **dadurch gekennzeichnet, dass** auch die zweite und/oder die dritte Messelektrode (58, 60) auf ihrer dem Füllrohr (28) abgewandten Seite durch die elektrisch leitfähige Schutzabschirmung (62) abgedeckt ist.

10. Vorrichtung nach einem der Ansprüche 7 bis 9, **dadurch gekennzeichnet, dass** auch die zweite und/oder die dritte Messelektrode (58, 60) in dem elektrisch nicht leitfähigen Halteabschnitt (54) angeordnet ist.

11. Vorrichtung nach einem der vorhergehenden Ansprüche, **dadurch gekennzeichnet, dass** die Schutzabschirmung (62) eine aktive Schutzabschirmung (62) bildet, die bei einer Füllstandsmessung auf das gleiche Potential angesteuert wird wie die erste Messelektrode (56) und/oder die zweite Messelektrode (58) und/oder die dritte Messelektrode (60).

12. Vorrichtung nach einem der vorhergehenden Ansprüche, **dadurch gekennzeichnet, dass** weiterhin eine Steuer- und Auswerteeinrichtung (48) vorgesehen ist, die die Mess- und Referenzelektroden im Betrieb der Rundläuferpresse ansteuert und anhand der Messdaten der Mess- und Referenzelektroden (28, 56, 58, 60) den Füllstand des Pulvermaterials in dem Füllrohr (28) bestimmt.

13. Vorrichtung nach einem der vorhergehenden Ansprüche, **dadurch gekennzeichnet, dass** die Mess- und/oder Referenzelektroden (28, 56, 58, 60) auf im Wesentlichen nicht-flexiblen PCB-Leiterplatten angeordnet sind.

14. Rundläuferpresse, umfassend einen mittels eines Drehantriebs drehbaren Rotor, wobei der Rotor eine obere Stempelführung (13) für obere Stempel (14) der Rundläuferpresse und eine untere Stempelführung (15) für untere Stempel (16) der Rundläuferpresse sowie eine zwischen den Stempelführungen (13, 15) angeordnete Matrizenschreibe (10) aufweist, wobei die Stempel (14, 16) mit Kavitäten (12) der Matrizenscheibe (10) zusammenwirken, weiter umfassend eine Fülleinrichtung (22), durch die zu verpressendes Pulvermaterial in die Kavitäten (12) der Matrizenscheibe (10) gefüllt wird, wobei die Fülleinrichtung (22) ein Füllrohr (28) umfasst, weiter umfassend mindestens eine obere Druckeinrichtung (30) und mindestens eine untere Druckeinrichtung (30), die im Betrieb mit den oberen Stempeln (14) und mit den unteren Stempeln (16) zum Verpressen des Pulvermaterials in den Kavitäten (12) der Matrizenscheibe (10) zusammenwirken, weiter umfassend eine Auswurfeinrichtung (40), in der in den Kavitäten (12) erzeugte Pressling ausgeworfen werden, **gekennzeichnet durch** eine Vorrichtung (50) zum kapazitiven Messen des Pulverfüllstands in der Fülleinrichtung (22) nach einem der vorhergehenden Ansprüche.

## Claims

1. A device for capacitively measuring the powder level in a filling apparatus (22) for filling cavities (12) of a die plate (10) of a rotary press with powder material to be pressed in the rotary press, comprising a filling pipe (28) of the filling apparatus (22), wherein a first measuring electrode (56) which forms a first electrical capacitor with a reference electrode (28) is arranged on the filling pipe (28), so that an electrical field can be formed between the first measuring electrode (56) and the reference electrode (28), and wherein the first measuring electrode (56) is covered on its side facing away from the filling pipe (28) by an electrically conductive protective shielding (62), wherein the protective shielding (62) is at ground potential, **characterized in that** the first measuring electrode (56) is arranged in an electrically non-conductive holding portion (54), and **in that** the holding portion (54) is arranged on the filling pipe (28) in a recess (52) of the filling pipe (28).

2. The device according to claim 1, **characterized in that** an electrically conductive filling pipe portion of the filling apparatus (22) located upstream and/or downstream of the filling pipe (28) which is provided with the first measuring electrode (56) is also at ground potential.

3. The device according to one of the preceding claims, **characterized in that** the reference electrode (28) is also at ground potential.

4. The device according to one of the preceding claims, **characterized in that** the filling pipe (28) which is provided with the first measuring electrode (56) is also at ground potential.

5. The device according to one of claims 1 to 4, **characterized in that** the reference electrode is also arranged on the filling pipe (28) which is provided with the first measuring electrode (56).

6. The device according to one of claims 1 to 4, **characterized in that** the reference electrode (28) is formed by the filling pipe (28) which is provided with the first measuring electrode (56).

7. The device according to one of the preceding claims, **characterized in that** a second measuring electrode (58) is also arranged on the filling pipe (28), wherein the second measuring electrode (58) and the reference electrode (28) form a second electrical capacitor, so that an electrical field can be formed between the second measuring electrode (58) and the reference electrode (28), and wherein the measuring region of the second measuring electrode (58) is selected such that it is entirely covered by powder material located in the filling pipe (28) during the operation of the rotary press.

8. The device according to one of the preceding claims, **characterized in that** a third measuring electrode (60) is also arranged on the filling pipe (28), wherein the third measuring electrode (60) and the reference electrode (28) form a third electrical capacitor, so that an electrical field can be formed between the third measuring electrode (60) and the reference electrode (28), and wherein the measuring region of the third measuring electrode (60) is selected such that it is located above the filling level of the powder material in the filling pipe (28) during the operation of the rotary press.

9. The device according to one of claims 7 or 8, **characterized in that** the second and/or the third measuring electrode (58, 60) is also covered on the side thereof facing away from the filling pipe (28) by the electrically conductive protective shielding (62).

10. The device according to one of claims 7 to 9, **characterized in that** the second and/or the third measuring electrode (58, 60) is also arranged in the electrically non-conductive holding portion (54).

11. The device according to one of the preceding claims, **characterized in that** the protective shielding (62) forms an active protective shielding (62) which is activated to the same potential as the first measuring electrode (56) and/or the second measuring electrode (58) and/or the third measuring electrode (60) during a measurement of the filling level.

12. The device according to one of the preceding claims, **characterized in that** a control and evaluation apparatus (48) is also provided, the control and evaluation apparatus activating the measuring and reference electrodes during the operation of the rotary press and determining the filling level of the powder material in the filling pipe (28) using the measurement data of the measuring and reference electrodes (28, 56, 58, 60).

13. The device according to one of the preceding claims, **characterized in that** the measuring and/or reference electrodes (28, 56, 58, 60) are arranged on substantially non-flexible PCBs - printed circuit boards.

14. A rotary press comprising a rotor which can be rotated by means of a rotary drive, wherein the rotor has an upper punch guide (13) for the upper punches (14) of the rotary press and a lower punch guide (15) for the lower punches (16) of the rotary press as well as a die plate (10) which is arranged between the punch guides (13, 15), wherein the punches (14, 16) cooperate with cavities (12) of the die plate (10), further comprising a filling apparatus (22) by which the powder material to be pressed is filled into the cavities (12) of the die plate (10), wherein the filling apparatus (22) comprises a filling pipe (28), further comprising at least one upper pressing apparatus (30) and at least one lower pressing apparatus (30) which during operation cooperate with the upper punches (14) and with the lower punches (16) for pressing the powder material into the cavities (12) of the die plate (10), further comprising an ejection apparatus (40) in which the pellets generated in the cavities (12) are ejected, **characterized by** a device (50) for capacitively measuring the powder level in the filling apparatus (22) according to one of the preceding claims.

## Revendications

1. Dispositif pour la mesure capacitive du niveau de remplissage de poudre dans un dispositif de remplissage (22) pour le remplissage de cavités (12) d'un disque porte-matrices (10) d'une presse rotative avec un matériau en poudre devant être comprimé dans la presse rotative, comprenant un tube de remplissage (28) du dispositif de remplissage (22), une première électrode de mesure (56) étant disposé sur le tube de remplissage (28), laquelle forme un premier condensateur électrique avec une électrode de référence (28), de telle sorte qu'un champ électrique peut être formé entre la première électrode de mesure (56) et l'électrode de référence (28), et la première électrode de mesure (56) étant couverte par un blindage de protection (62) électriquement conducteur sur son côté opposé au tube de remplissage (28), le blindage de protection (62) étant au potentiel terrestre, **caractérisé en ce que** la première électrode de mesure (56) est disposée dans une section de maintien (54) électriquement non conductrice, et **en ce que** la section de maintien (54) est disposée sur le tube de remplissage (28), dans un évidement (52) du tube de remplissage (28).

2. Dispositif selon la revendication 1, **caractérisé en ce qu'**une section de tube de remplissage du dispositif de remplissage (22) électriquement conductrice se trouvant en amont et/ou en aval du tube de remplissage (28) muni de la première électrode de mesure (56) est également au potentiel terrestre.

3. Procédé selon l'une des revendications précédentes, **caractérisé en ce que** l'électrode de référence (28) aussi est au potentiel terrestre.

4. Procédé selon l'une des revendications précédentes, **caractérisé en ce que** le tube de remplissage (28) muni de la première électrode de mesure (56) aussi est au potentiel terrestre.

5. Dispositif selon l'une des revendications 1 à 4, **caractérisé en ce que** l'électrode de référence est également disposée sur le tube de remplissage (28) muni de la première électrode de mesure (56).

6. Dispositif selon l'une des revendications 1 à 4, **caractérisé en ce que** l'électrode de référence (28) est formée par le tube de remplissage (28) muni de la première électrode de mesure (56).

7. Dispositif selon l'une des revendications précédentes, **caractérisé en ce qu'**une deuxième électrode de mesure (58) est en outre disposée sur le tube de remplissage (28), la deuxième électrode de mesure (58) et l'électrode de référence (28) formant un deuxième condensateur électrique, de sorte qu'un champ électrique peut être généré entre la deuxième électrode de mesure (58) et l'électrode de référence (28), et la plage de mesure de la deuxième électrode de mesure (58) étant sélectionnée de telle sorte qu'elle entièrement recouverte par du matériau en poudre se trouvant dans le tube de remplissage (28), pendant le fonctionnement de la presse rotative.

8. Dispositif selon l'une des revendications précédentes, **caractérisé en ce qu'**une troisième électrode de mesure (60) est en outre disposée sur le tube de remplissage (28), la troisième électrode de mesure (60) et l'électrode de référence (28) formant un troisième condensateur électrique, de sorte qu'un champ électrique peut être généré entre la troisième électrode de mesure (60) et l'électrode de référence (28), et la plage de mesure de la troisième électrode de mesure (60) étant sélectionnée de telle sorte qu'elle se trouve au-dessus du niveau de remplissage du matériau en poudre dans le tube de remplissage (28), pendant le fonctionnement de la presse rotative.

9. Dispositif selon l'une des revendications 7 ou 8, **caractérisé en ce que** la deuxième et/ou la troisième électrode de mesure (58, 60) aussi sont recouvertes par le blindage de protection (62) électriquement conducteur sur leur côté opposé au tube de remplissage (28).

10. Dispositif selon l'une des revendications 7 à 9, **caractérisé en ce que** la deuxième et/ou la troisième électrodes (58, 60) sont disposées dans le section de maintien (54) électriquement non conductrice.

11. Dispositif selon l'une des revendications précédentes, **caractérisé en ce que** le blindage de protection (62) forme un blindage de protection (62) actif, lequel est excité avec le même potentiel que la première électrode de mesure (56) et/ou la deuxième électrode de mesure (58) et/ou la troisième électrode de mesure (60), lors d'une mesure du niveau de remplissage.

12. Dispositif selon l'une des revendications précédentes, **caractérisé en ce qu'**un dispositif de commande et d'analyse (48) est en outre prévu, lequel excite les électrodes de mesure et de référence pendant le fonctionnement de la presse rotative et détermine le niveau de remplissage du matériau en poudre dans le tube de remplissage (28), à l'aide des données de mesure des électrodes de mesure et de référence (28, 56, 58, 60).

13. Dispositif selon l'une des revendications précédentes, **caractérisé en ce que** les électrodes de mesure et/ou de référence (28, 56, 58, 60) sont disposées sur des cartes de circuit imprimé PCB essentiellement non flexibles.

14. Presse rotative, comprenant un rotor rotatif grâce à un entraînement rotatif, le rotor présentant un guide de poinçon supérieur (13) pour poinçons supérieurs (14) de la presse rotative et un guide de poinçon inférieur (15) pour poinçons inférieurs (16) de la presse rotative ainsi qu'un disque porte-matrices (10) disposée entre les guides de poinçons (13, 15), les poinçons (14, 16) interagissant avec des cavités (12) du disque porte-matrices (10), comprenant en outre un dispositif de remplissage (22), à travers lequel du matériau en poudre devant être comprimé est versé dans les cavités (12) du disque porte-matrices (10), le dispositif de remplissage (22) comprenant un tube de remplissage (28), comprenant en outre au moins un dispositif de pressage (30) supérieur et au moins un dispositif de pressage (30) inférieur, lesquels interagissent avec les poinçons supérieurs (14) et avec les poinçons inférieurs (16) pendant le fonctionnement, pour la compression du matériau en poudre dans les cavités (12) du disque porte-matrices (10), comprenant en outre un dispositif d'éjection (40), dans lequel les pièces pressées produites dans les cavités (12) sont éjectées, **caractérisée par** un dispositif (50) pour la mesure capacitive du niveau de remplissage de poudre dans le dispositif de remplissage (22) selon l'une des revendications précédentes.
